# EUROPÄISCHE PATENTANMELDUNG

(11) **EP 0 688 991 A1**
(43) Veröffentlichungstag der Anmeldung: **27.12.1995**
(21) Anmeldenummer: 95107389.9
(22) Anmeldetag: 16.05.1995
(51) Int. Cl.: F16K 37/00

(54) **Ventil mit Handradstellungsanzeiger**

(30) Priorität: 14.06.1994 DE 9409474 U
(71) Anmelder: ARI-ARMATUREN ALBERT RICHTER GmbH & Co.KG., D-33758 Schloss Holte-Stukenbrock (DE)
(72) Erfinder: Koch, Hans-Werner, D-33161 Hövelhof (DE)
(74) Vertreter: Stracke, Alexander, Dipl.-Ing.

(57) **Zusammenfassung**

1. Ventil mit axial festgelegtem Handrad (2) und einem Handrad-Stellungsanzeiger,

1.2 bei dem der Handrad-Stellungsanzeiger eine Nockenscheibe (7) mit als Verzahnungen unterschiedlicher Teilung und auf unterschiedlichen, zur Ventilspindel (3) koaxialen Teilkreisdurchmessern angeordneten Mitnehmernocken (14, 15) am Ventilgehäuse (1) festlegbar ist,

1.3 ein Anzeigengehäuse (4) am Handrad (2) mit diesem umlaufend festlegbar ist,

1.4 Anzeigerädchen (5,6) drehbar und senkrecht zur Drehachse der Ventilspindel (3) im Anzeigengehäuse (4) derart angeordnet sind, daß eine am Außenumfang jedes Anzeigerädchens (5, 6) angeordnete Verzahnung (8, 9) bei Drehung des Handrades (2) mit der zugehörigen Verzahnung (14, 15) der Nockenscheibe (7) in Wirkverbindung tritt und jeder Mitnehmernocken (14, 15) der Verzahnung der Nockenscheibe (7) das zugehörige Anzeigerädchen (5, 6) um feste Winkelbeträge weiterschaltet,

1.5 auf jedem Anzeigerädchen (5, 6) eine Skalierung (10, 11) angeordnet ist, deren Stellung durch ein jeweils zugehöriges Sichtfenster (18, 19) des Anzeigengehäuses (4) ablesbar ist.

## Beschreibung

Die Erfindung betrifft ein Ventil mit axial festgelegtem Handrad, das mit einem Handradstellungsanzeiger ausgestattet ist, gemäß Oberbegriff des Anspruchs 1.

Handelsübliche Ventile der gattungsgemäßen Art finden vornehmlich als Stellventile in Rohrsystemen ihre Anwendung, bei denen aufgrund der unterschiedlichen Betriebszustände eines Rohrsystems von großer Bedeutung ist, den Einstellungszustand eines Ventiles reproduzierbar ablesen und auch gezielt Betriebszustände durch Wiederholbarkeit von Ventilstellungen vorgeben zu können. Ein derartiges handelsübliches Ventil ist in dem deutschen Gebrauchsmuster G 90 03 195.4 beschrieben. Das dargestellte Ventil weist ein Hohlrad auf, das drehfest mit einem Ventilgehäuse verbunden ist und das auf der vom Ventil abgewandten Seite eine Beschriftung zur Anzeige der Teilumdrehungen eines Handrades gegenüber dem Ventil trägt. Weiterhin weist das Ventil ein Endrad auf, das auf seinem Umfang eine Zahnung trägt, die mit einem oder mehreren Mitnehmern das Hohlrades kämmt und das auf seiner vom Ventil abgewandten Seite eine Beschriftung zur Anzeige der Vollumdrehungen des Handrades gegenüber dem Ventil trägt. Betätigt wird das Ventil durch eine Handradkappe, die mit einer Betätigungsspindel des Ventils drehfest verbunden ist und die auf der vom Ventil abgewandten Seite zwei Sichtfenster für Teile der Beschriftungen aufweist. Durch die relative Verdrehung von Handradkappe gegenüber dem Hohlrad wird zum einen aufgrund des umlaufenden Sichtfensters eine Stellungsanzeige der Teilumdrehungen des Handrades innerhalb einer Handradumdrehung angezeigt. Zum anderen wird das Endrad, das in Form eines Planetenrades gelagert ist, durch einen Schaltnocken bei einer vollständigen Umdrehung des Handrades um einen festen Winkelbetrag weitergeschaltet.

Problematisch an der dargestellten Konstruktion ist die Vielzahl der Teile, die zur Funktion benötigt werden und für eine aufwendige Montage sowie eventuell auftretende Probleme während des Betriebes verantwortlich sind. Zum anderen ist die Nachrüstbarkeit eines derartigen Handrades auf Ventile verschiedener Konstruktion bzw. Hersteller nur sehr bedingt gegeben, da die Anflanschungen hinsichtlich ihrer Schnittstelle sehr spezifisch vorgegeben sein müssen. Auch ist bei größeren Handraddurchmessern, die bei Anlagen mit hohem Systemdruck für die Aufbringung der Schließkräfte erfordlicher sind, eine derartige Konstruktion unvorteilhaft, da das Handrad im wesentlichen in Form einer geschlossenen Scheibe ausgeführt sein muß, um Platz für das Endrad sowie die Sichtfenster zu schaffen.

Aufgabe der vorliegenden Erfindung ist es daher, ein Ventil mit axial festgelegtem Handrad und einem Handradstellungsanzeiger bereitzustellen, das bei unkompliziertem Aufbau und kleiner Teilezahl des Handradstellungsanzeigers auch für den Einsatz an Ventilen mit großem Handraddurchmesser geeignet ist und sich aufgrund einer einfachen Anflanschung sowie geringen Platzbedarf auch für die Nachrüstung an verschiedenen Ventilen eignet.

Die Lösung der erfindungsgemäßen Aufgabe ergibt sich aus dem kennzeichnenden Teil der Anspruchs 1.

Das erfindungsgemäße Ventil besteht aus einer Nockenscheibe, die am Ventiloberteil festgelegt ist. Auf der im wesentlichen scheibenförmig und senkrecht zur Drehachse der Ventilspindel ausgerichteten Nockenscheibe sind in unterschiedlichen, zur Ventilspindel koaxialen Teilkreisdurchmessern Mitnehmernocken angeordnet, die Verzahnungen unterschiedlicher Teilung aufweisen. Mit den Verzahnungen dieser Nockenscheibe treten Anzeigerädchen in Wirkverbindung, die in einem Anzeigengehäuse am Handrad mit diesem umlaufend festlegbar sind und deren Drehachse senkrecht zur Drehachse der Ventilspindel angeordnet sind. Dabei weist jedes Anzeigerädchen am Außenumfang eine Verzahnung auf, die bei der Drehung des Handrades mit der zugehörigen Verzahnung der Nockenscheibe in Wirkverbindung tritt und bei der jeder Mitnehmernocken der Verzahnung der Nockenscheibe das zugehörige Anzeigerädchen um feste Winkelbeträge weiterschaltet. Die Stellung der Anzeigerädchen wird durch eine am Umfang angeordnete Skalierung angezeigt, die durch ein jeweils zugehöriges, im Anzeigengehäuse angeordnetes Sichtfenster ablesbar ist.

Die kinematische Zuordnung von Verzahnung der Nockenscheibe und zugehörigem Anzeigerädchen sowie die Anordnung der Mitnehmernocken der Verzahnung auf der Nockenscheibe läßt durch unterschiedliche Teilungen eine Anzeige dergestalt zu, daß ein Anzeigerädchen für eine Drehstellung innerhalb einer gesamten Handradumdrehung vorgesehen ist, wobei vorzugsweise eine dezimale Teilung, beispielsweise eine 1/10-Teilung verwendet wird. Ein weiterer Mitnehmernocken auf einem anderen Teilkreisdurchmesser kann dann beispielsweise für die Anzeige jeweils einer kompletten Handradumdrehung vorgesehen werden. Hierzu wird nur genau ein Mitnehmernocken auf diesem Teilkreisdurchmesser vorgesehen. Durch die Staffelung und die Teilung der Verzahnung der Nockenscheibe ist es möglich, die angezeigte Ventilstellung an die geforderte Genauigkeit der Anzeige weitestgehend anzupassen. Beispielsweise kann bei sehr genau einzustellenden Ventilen neben einer 1/1- und 1/10-Teilung auch eine 1/100-Teilung oder eine derartig feinere Teilung vorgesehen werden.

Die Justierung der Nullagen der Skalierung, die vornehmlich für die korrekte Anzeige der Ventilendlagen erforderlich ist, erfolgt zum einen durch eine Verdrehung der Nockenscheibe relativ zum Ventiloberteil und zum anderen durch ein Verdrehen der Anzeigerädchen, so daß ein exakter Nullabgleich einfach möglich ist.

Weitere vorteilhafte Ausgestaltungen der Erfindung zeigen die Unteransprüche.

Ein bevorzugtes Ausführungsbeispiel des erfindungsgemäßen Ventils zeigt die Zeichnung.

Es zeigen:
- Figur 1: eine Vorderansicht des erfindungsgemäßen Ventils mit einem Schnitt durch den Handradstellungsanzeiger,
- Figur 2: eine Detailzeichnung des Anzeigengehäuses sowie der Gesamtbaugruppe Anzeigengehäuse mit Anzeigerädchen,
- Figur 3: eine Draufsicht auf das Ventil,
- Figur 4: eine Aufsicht auf die Nockenscheibe mit Darstellung der Teilung der Mitnehmernocken,
- Figur 5: eine kinematisch ähnliche Anordnung der beiden Anzeigerädchen auf zwei getrennten, zueinander versetzten Drehachsen in einer Vorderansicht,
- Figur 6: eine Draufsicht auf das Ventil aus der Figur 5.

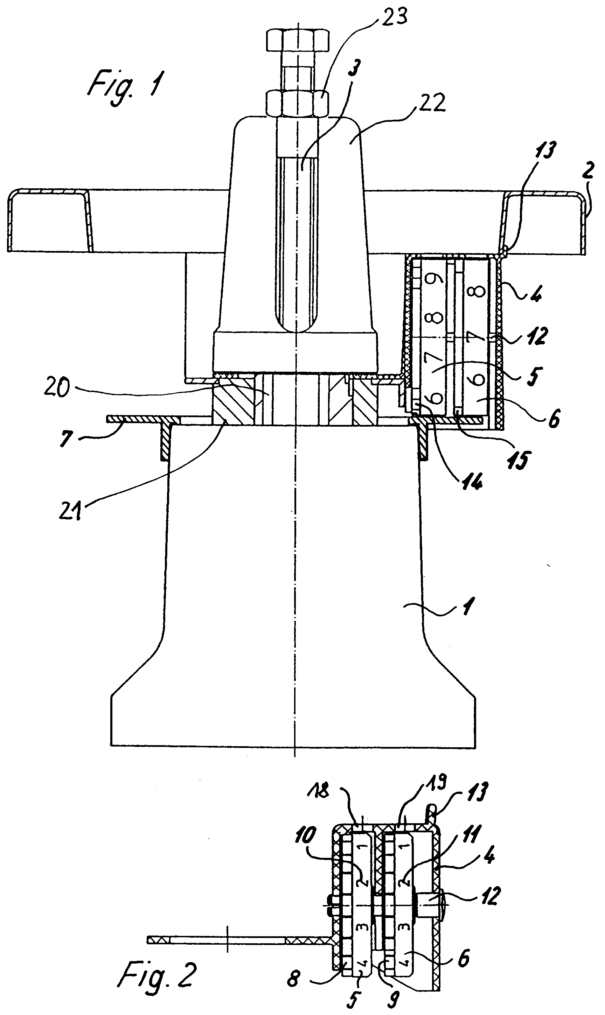

In der Figur 1 ist eine Vorderansicht des erfindungsgemäßen Ventils mit einem Handradstellungsanzeiger mit zwei Anzeigerädchen 5 und 6 für eine 1/1-Teilung und einer 1/10-Teilung dargestellt. Auf dem Ventil, dessen Ventiloberteil 1 dargestellt ist, wird an einer Gewindebuchse 20 der erfindungsgemäße Handradstellungsanzeiger angeordnet. Hierzu wird die Nockenscheibe 7, die im wesentlichen eben und scheibenförmig ist, mit einem zylindrischen Ansatz versehen, der passend zum Ventiloberteil 1 ausgebildet ist und mittels geeigneter Klemmvorrichtungen selbsthaltend auf dem Ventiloberteil 1 aufgesteckt werden kann. Abgestützt über eine Distanzscheibe 21 wird das Anzeigengehäuse 4 konzentrisch zur Drehachse der Ventilspindel 3 aufgesteckt und über eine Ventilkappe 22 und eine Kontermutter 23 axial festgelegt, wobei die Drehbarkeit um die Drehachse der Ventilspindel 3 gegeben ist. Das Anzeigegehäuse 4 wird über einen Mitnehmernocken 13 am Handrad 2 festgelegt, so daß jede Drehung des Handrades 2 auch eine Drehung des Anzeigegehäuses 4 bewirkt. In dem Anzeigegehäuse 4 vormontiert ist das Anzeigerädchen 5 für eine 1/10-Teilung sowie das Anzeigerädchen 6 für eine 1/1-Teilung. Beide Anzeigerädchen 5 und 6 sitzen in dieser bevorzugten Ausführungsform auf einer gemeinsamen Drehachse 12, die klemmbar in das Anzeigegehäuse 4 eingesteckt ist. Das Anzeigegehäuse 4 sowie die Anzeigerädchen 5 und 6 sind so angeordnet, daß ihre Verzahnung 8 und 9 mit den auf der Nockenscheibe 7 angeordneten Mitnehmernocken 14 für die 1/10-Teilung und dem Mitnehmernocken 15 für die 1/1-Teilung in Wirkverbindung treten können.

In der Figur 2 ist in einer Teilansicht das Anzeigegehäuse 4 mit den vormontierten Anzeigerädchen 5 und 6 noch einmal detailliert dargestellt. Die Anzeigerädchen 5 und 6 sind auf einer Drehachse 12 aufgesteckt, die in das Anzeigegehäuse 4 einsteckbar und über eine Klemmverbindung axial festgelegt ist. Auf dem Umfang der Anzeigerädchen 5 und 6 sind Skalierungen 10 und 11 angeordnet, die passend zu der Teilung des jeweiligen Anzeigerädchens eine Beschriftung 10, 11 aufweisen. Ebenfalls auf dem Umfang der Anzeigerädchen 5 und 6 sind Verzahnungen 8 und 9 angeordnet, die passend zur Anordnung der Mitnehmernocken 14 und 15 ausgeführt sind und mit diesen jeweils in Wirkverbindung treten. Auf der Oberseite des Anzeigegehäuses 4 sind Sichtfenster 18 und 19 derart angeordnet, daß von der ventilabgewandten Seite des Handradstellungsanzeigers eine Ablesung der Skalierung 10, 11 der Anzeigerädchen 5 und 6 möglich ist. Je nach kinematischer Anordnung der beiden Anzeigerädchen 5 und 6 auf einer oder mehreren Drehachsen 12 sind diese Sichtfenster 18, 19 zueinander versetzt angeordnet. Hier liegen sie in Ableserichtung der Skalierung 10, 11 direkt übereinander.

Zur Verbesserung der Schaltbarkeit der Verzahnung 8, 9 der Anzeigerädchen 5, 6 kann für jedes der Anzeigerädchen 5, 6 ein nicht dargestelltes Federelement vorgesehen werden, daß kraftschlüssig in je eine Verzahnung 8, 9 eingreift und diese gegen unbeabsichtigtes Verstellen z.B. durch Reibungskontakte sichert. Die Schaltkräfte durch die Mitnehmernocken 14, 15 würden durch ein derartiges Federelement dann elastisch federnd die Verzahnung 8, 9 um einen Schritt weiterrasten lassen.

Die Funktion des Handradstellungsanzeigers läßt sich nun derart charakterisieren, daß das Anzeigegehäuse 4, das über den Mitnehmernocken 13 am Handrad 2 festgelegt ist, bei einer Betätigung des Handrades 2 mit diesem Handrad um die Drehachse der Ventilspindel 3 umläuft. Dabei werden die Anzeigerädchen 5 und 6 durch die auf der Nockenscheibe 7 angeordneten Mitnehmernocken 14, 15 weitergeschaltet, so daß die Stellung der Anzeigerädchen 5, 6 und damit die Stellung des Handrades 2 von oben durch die Sichtfenster 18 und 19 ablesbar sind.

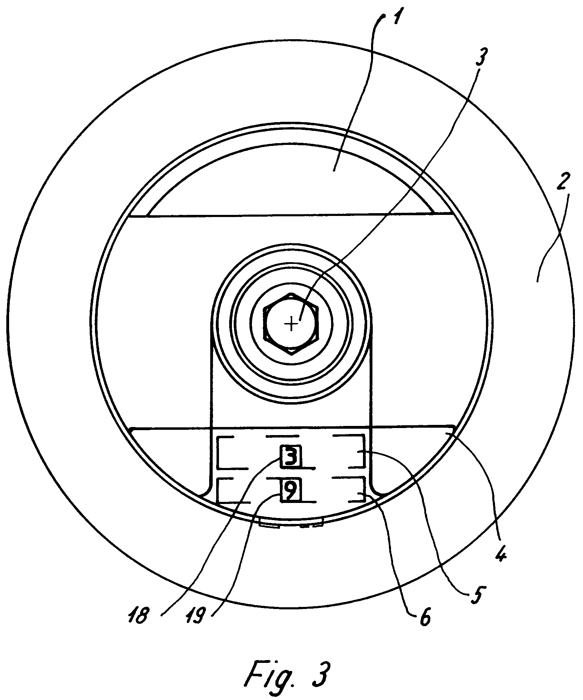

In der Figur 3 ist eine derartige Ablesesituation von der ventilabgewandten Seite des Handradstellungsanzeigers dargestellt. Das Handrad 2 umschließt von oben gesehen das Anzeigegehäuse 4, indem die Sichtfenster 18 und 19 zur Anzeige der Stellung der Anzeigerädchen 5 und 6 angeordnet sind.

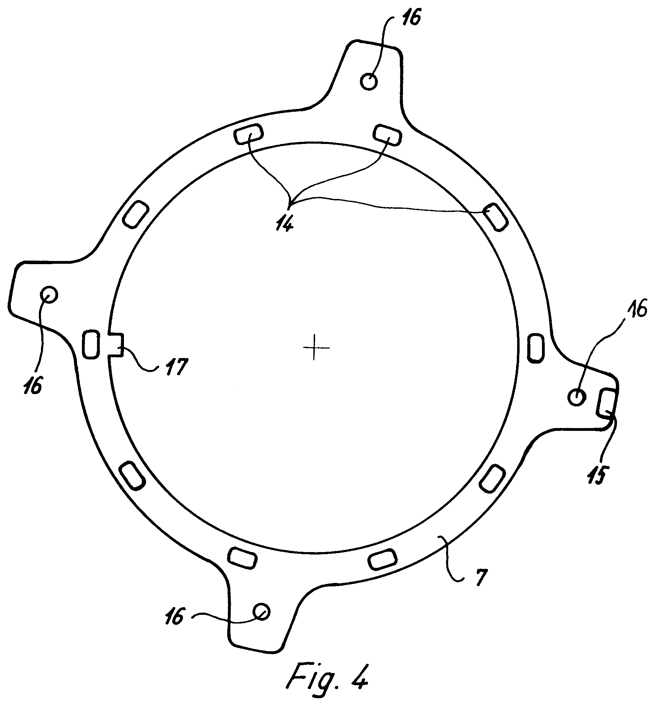

In der Figur 4 ist in einer Draufsicht die Nockenscheibe 7 dargestellt, die als Ring mit einem zylinderförmigen Ansatz zur Klemmung auf dem Ventiloberteil 1 ausgeführt ist. Man erkennt die unterschiedliche Teilung der Nocken 14 und des Nockens 15, wobei die zehn Mitnehmernocken 14 für die Schaltung des Anzeigerädchens 5 in 1/10-Teilung vorgesehen sind. Der Mitnehmernocken 15 schaltet das Anzeigerädchen 6 bei einer Umdrehung genau um eine Teilung weiter. Durch entsprechend dichtere Anordnung derartiger Mitnehmernocken 14, 15 kann die Anzeige eines Anzeigerädchens 5, 6 genauer ausgelegt werden. Ebenfalls in der Nockenscheibe 7 sind Bohrungen 16 angeordnet, die für das Durchführen von nicht dargestellten Plombierungsdrähten dienen, durch die eine Eichung des Ventiles gegenüber unzulässiger Veränderung gesichert werden kann. Ebenfalls ist eine Verdrehsicherung 17 zu sehen, die bei Bedarf in eine entsprechende Gegenform am Ventiloberteil 1 eingreifen kann und somit eine einfache Justierung der Nullage der Nockenscheibe 7 relativ zum Ventiloberteil 1 ermöglicht.

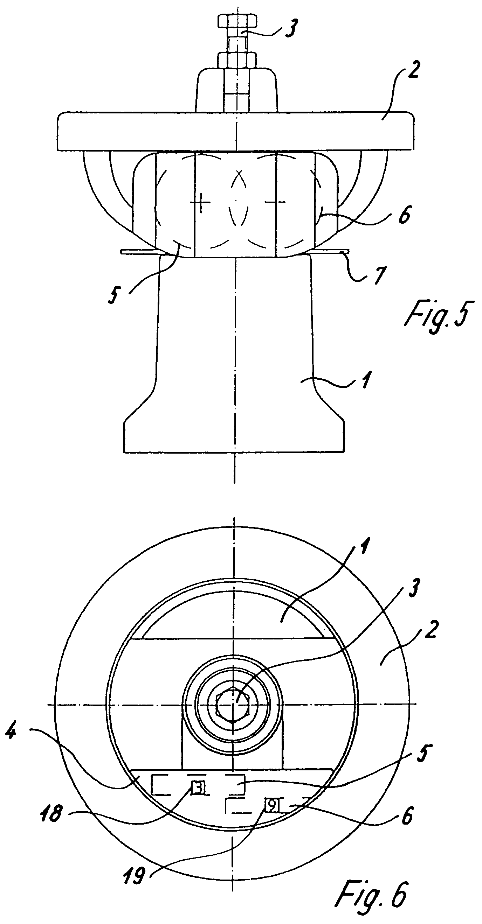

In der Figur 5 ist eine kinematisch abgewandelte Anordnung der Anzeigerädchen 5 und 6 dargestellt, die hierbei mit ihren Drehachsen 12 ebenfalls senkrecht zur Drehachse der Ventilspindel 3 angeordnet sind, wobei ein horizontaler Versatz der Drehachsen 12 zueinander gewählt wurde. In der Figur 6 erkennt man, daß dieser Versatz ebenfalls einen Versatz der Sichtfenster 18 und 19 erfordert, die in das Anzeigegehäuse 4 eingelassen sind.

Durch die einfache Befestigung des Handradstellungsanzeigers sowohl an dem Ventiloberteil 1 als auch an dem Handrad 2 ist es von besonderer Bedeutung, daß eine derartige Einrichtung an Ventilen unterschiedlicher Bauart sowie an Ventilen mit unterschiedlichen Anfflanschungsmöglichkeiten, vor allem auch an Ventilen mit Flanschen anderer Hersteller angeordnet werden kann. Hierzu sind gegebenenfalls entsprechende Anflanschungsvorrichtungen mitzuliefern.

## Patentansprüche

1. Ventil mit axial festgelegtem Handrad (2) und einem Handrad-Stellungsanzeiger,
**dadurch gekennzeichnet, d**aß
bei dem Handrad-Stellungsanzeiger
- eine Nockenscheibe (7) mit als Verzahnungen unterschiedlicher Teilung und auf unterschiedlichen, zur Ventilspindel (3) koaxialen Teilkreisdurchmessern angeordneten Mitnehmernocken (14, 15) am Ventilgehäuse (1) festlegbar ist,
- ein Anzeigengehäuse (4) am Handrad (2) mit diesem umlaufend festlegbar ist,
- Anzeigerädchen (5,6) drehbar und senkrecht zur Drehachse der Ventilspindel (3) im Anzeigengehäuse (4) derart angeordnet sind, daß eine am Außenumfang jedes Anzeigerädchens (5, 6) angeordnete Verzahnung (8, 9) bei Drehung des Handrades (2) mit der zugehörigen Verzahnung (14, 15) der Nockenscheibe (7) in Wirkverbindung tritt und jeder Mitnehmernocken (14, 15) der Verzahnung der Nockenscheibe (7) das zugehörige Anzeigerädchen (5, 6) um feste Winkelbeträge weiterschaltet,
- auf jedem Anzeigerädchen (5, 6) eine Skalierung (10, 11) angeordnet ist, deren Stellung durch ein jeweils zugehöriges Sichtfenster (18, 19) des Anzeigengehäuses (4) ablesbar ist.

2. Ventil nach Anspruch 1, **dadurch gekennzeichnet, daß** eine erste Verzahnung (14) der Nockenscheibe (7) in 1/10-Stufen geteilt ist.

3. Ventil nach Anspruch 1, **dadurch gekennzeichnet, daß** eine zweite Verzahnung (14) der Nockenscheibe (7) in 1/1-Stufen geteilt ist.

4. Ventil nach einem der Ansprüche 1 bis 3, **dadurch gekannzeichnet, daß** die Anzeigerädchen (5, 6) um verschiedene, Achsen (12) drehbar sind, die senkrecht zur Drehachse der Ventilspindel (3) angeordnet sind.

5. Ventil nach einem der Ansprüche 1 bis 3, **dadurch gekennzeichnet, daß** die Anzeigerädchen (5, 6) um eine gemeinsame Achse (12) drehbar sind, die senkrecht zur Drehachse der Ventilspindel (3) angeordnet ist.

6. Ventil nach einem der Ansprüche 1 bis 3, **dadurch gekennzeichnet, daß** die Sichtfenster (18, 19) auf einer dem Ventil abgewandten Seite des Anzeigengehäuses (4) angeordnet sind, vorzugsweise nebeneinanderliegend und/oder übereinanderliegend.

7. Ventil nach Anspruch 1, **dadurch gekennzeichnet, daß** in die Verzahnung (8, 9) jedes der Anzeigerädchen (5, 6) ein Federelement kraftschlüssig eingreift.

8. Ventil nach Anspruch 1, **dadurch gekennzeichnet, daß** die Nockenscheibe (7) eine zur Festlegung am Ventilgehäuse (1) dienende Verdrehsicherung (17) aufweist.

9. Ventil nach Anspruch 1, **dadurch gekennzeichnet, daß** die Nockenscheibe (7) Bohrungen (16) zur Durchführung von Plombierungsdrähten aufweist.

10. Ventil nach einem der Ansprüche 1 bis 3, **dadurch gekennzeichnet, daß** die Nullagen der Skalierung (8, 9) bei Ventilendlage für die 1/1-Teilung durch Verdrehen der Nockenscheibe (7) und für die 1/10-Teilung durch Verdrehen des Anzeigerädchens (5, 6) einstellbar sind.

11. Ventil nach Anspruch 1, **dadurch gekennzeichnet, daß** Ventile mit Gewindebuchse (20) mit dem Handrad-Stellungsanzeiger nachrüstbar sind.
